# EUROPEAN PATENT APPLICATION

(11) **EP 4 625 970 A1**
(43) Date of publication of application: **01.10.2025**
(21) Application number: 25162994.5
(22) Date of filing: 11.03.2025
(51) Int. Cl.: H04N 9/31, F21S 41/153, G06V 20/58

(54) **LIGHT ARRAY CONTROL**

(30) Priority: 25.03.2024 US 202463569657 P; 24.02.2025 US 202519061830
(71) Applicant: Analog Devices International Unlimited Company, Co. Limerick (IE)
(72) Inventor: MULLINS, Sean, Limerick (IE); MOLINA, Isaac, Limerick (IE); BARRERAS ALMARCHA, Hector, Limerick (IE)
(74) Representative: Horler, Philip John

(57) **Abstract**

There is provided a remote node for controlling a vehicle headlamp light array. The remote node comprising: a memory configured to store a plurality of mathematical functions for generating a corresponding plurality of predetermined image types, wherein the plurality of image types comprises at least a low beam image and a high beam image; a receive interface configured to receive frame data, wherein the frame data comprises selection data indicative of a selected one of the plurality of image types; a rendering engine configured to generate, using a mathematical function of the plurality of mathematical functions corresponding to the selected one of the plurality of image types, a signal usable by the vehicle headlamp light array to generate an output image; and an output interface configured to output the signal to the vehicle headlamp light array.

## Description

### Related applications

This application claims the benefit of priority from US provisional patent application 63/569,657 filed on 25 March 2024, which is incorporated by reference in its entirety.

### Technical Field

The disclosure herein relates to controlling a light array. In one example, the disclosure herein relates controlling a vehicle headlamp light array using a vehicle CPU and a remote node.

### Background

Modern vehicles are increasingly incorporating advanced technologies to enhance safety and user experience. One such area of innovation is vehicle headlamp systems, which are evolving from traditional headlights to sophisticated light arrays capable of projecting high-resolution images. These advanced headlamp systems can provide various functionalities, such as adaptive lighting, which adjusts the beam pattern based on driving conditions, and the ability to project information onto the road surface. However, the implementation of these advanced features presents several technical challenges.

Current headlamp systems often rely on high-bandwidth data links to transmit detailed image data from the vehicle's central processing unit (CPU) to the headlamp light array. This approach requires expensive cabling and connectors, which can significantly increase the overall cost and complexity of the vehicle's electrical system. Additionally, the high data rates needed for transmitting image data can strain the vehicle's communication infrastructure, potentially impacting the performance of other critical systems.

Another challenge is the need for real-time processing and rendering of dynamic images, such as adaptive beam patterns and overlay information like speed warnings or hazard alerts. Existing solutions may involve transmitting large amounts of raw image data, which can be inefficient and lead to latency issues. Furthermore, the flexibility to adjust the projected images based on real-time conditions is limited by the current methods of data transmission and processing. These limitations highlight the need for more efficient and cost-effective solutions to support the next generation of vehicle headlamp systems.

### Summary

According to a first aspect of the invention, there is provided a remote node for controlling a vehicle headlamp light array. The remote node comprising: a memory configured to store a plurality of mathematical functions for generating a corresponding plurality of predetermined image types, wherein the plurality of image types comprises at least a low beam image and a high beam image; a receive interface configured to receive frame data, wherein the frame data comprises selection data indicative of a selected one of the plurality of image types; a rendering engine configured to generate, using a mathematical function of the plurality of mathematical functions corresponding to the selected one of the plurality of image types, a signal usable by the vehicle headlamp light array to generate an output image; and an output interface configured to output the signal to the vehicle headlamp light array.

Optionally, the frame data comprises overlay information for generating an overlay to be applied to the selected one of the plurality of image types. Optionally, the rendering engine is configured to generate the signal further using the overlay information.

Optionally, the overlay information comprises mask information for generating at least one mask region for inclusion in the overlay.

Optionally, each at least one mask region has a defined light intensity.

Optionally, the defined light intensity is uniform the each at least one mask region, or wherein the defined light intensity varies within each at least one mask region.

Optionally, the defined light intensity is of lower or higher light intensity relative to the non-masked regions. Optionally, the defined light intensity comprises zero intensity.

Optionally, the mask information is indicative of at least one mask coordinate and an intensity value for each at least one mask region.

Optionally, each mask coordinate comprises at least one pair of x, y coordinate values, defining a size, shape and position of the mask region.

Optionally, each of the at least one pair of coordinate values comprises 16 bits, and the intensity value comprises 8 bits.

Optionally, the mask information is for generating up to 25 mask regions.

Optionally, the overlay information comprises supplementary information for inclusion of a supplementary image in the overlay.

Optionally, the supplementary information comprises a compressed version of the supplementary image and the rendering engine is configured to generate the supplementary image using the supplementary information.

Optionally, the remote node receives the frame data from a processing unit over a 10BASE-T1S Ethernet link.

Optionally, the remote node is an E2B.

Optionally, the plurality of mathematical functions are received from a processing unit.

Optionally, the signal includes Cyclic Redundancy Check (CRC) data to ensure data integrity.

Optionally, the frame data further comprises parameter changes to the mathematical function.

According to a second aspect of the invention, there is provided a processing unit for controlling a vehicle headlamp light array, comprising: a processing unit configured to generate frame data comprising selection data indicative of a selected one of a plurality of image types, wherein the plurality of image types comprises at least a low beam image and a high beam image; and a transmit interface configured to send the frame data to a remote node for generating a signal at the remote node usable by the vehicle headlamp light array to generate an output image.

Optionally, the frame data comprises overlay information for generating an overlay to be applied to the selected one of the plurality of image types.

Optionally, the overlay information comprises mask information for generating at least one mask region for inclusion in the overlay.

Optionally, each at least one mask region has a defined light intensity.

Optionally, the defined light intensity is uniform the each at least one mask region, or wherein the defined light intensity varies within each at least one mask region.

Optionally, the defined light intensity is of lower or higher light intensity relative to the non-masked regions. Optionally, the defined light intensity comprises zero intensity.

Optionally, the mask information is indicative of at least one mask coordinate and an intensity value for each at least one mask region.

Optionally, each mask coordinate comprises at least one pair of x, y coordinate values, defining a size, shape and position of the mask region.

Optionally, each of the at least one pair of coordinate values comprises 16 bits, and the intensity value comprises 8 bits.

Optionally, the mask information is for generating up to 25 mask regions.

Optionally, the overlay information comprises supplementary information for inclusion in the overlay.

Optionally, the supplementary information is compressed.

Optionally, the transmit interface is configured to send the frame data to the remote node over a 10BASE-T1S Ethernet link.

According to a third aspect of the invention, there is provided a system for controlling a vehicle headlamp light array, comprising: a processing unit of any preceding processing unit statement; a remote node of any preceding remote node statement.

According to a fourth aspect of the invention, there is provided a method for controlling a vehicle headlamp light array using a remote node, comprising: receiving frame data, wherein the frame data comprises selection data indicative of a selected one of a plurality of image types, wherein the plurality of image types comprises at least a low beam image and a high beam image; generating, using a mathematical function corresponding to the selected one of the plurality of image types, a signal usable by the vehicle headlamp light array to generate an output image; outputting the signal to the vehicle headlamp light array.

Optionally, the frame data comprises overlay information for generating an overlay to be applied to the selected one of the plurality of image types. Optionally, the remote note is configured to generate the signal further using the overlay information.

Optionally, the overlay information comprises mask information for generating at least one mask region for inclusion in the overlay.

Optionally, each at least one mask region has a defined light intensity.

Optionally, the defined light intensity is uniform the each at least one mask region, or wherein the defined light intensity varies within each at least one mask region.

Optionally, the defined light intensity is of lower or higher light intensity relative to the non-masked regions. Optionally, the defined light intensity comprises zero intensity.

Optionally, the mask information is indicative of at least one mask coordinate and an intensity value for each at least one mask region.

Optionally, each mask coordinate comprises at least one pair of x, y coordinate values, defining a size, shape and position of the mask region.

Optionally, each of the at least one pair of coordinate values comprises 16 bits, and the intensity value comprises 8 bits.

Optionally, the mask information is for generating up to 25 mask regions.

Optionally, the overlay information comprises supplementary information for inclusion in the overlay.

Optionally, the supplementary information is compressed, and the method further comprises decompressing the supplementary information.

Optionally, the signal includes Cyclic Redundancy Check (CRC) data to ensure data integrity.

Optionally, the frame data further comprises parameter changes to the mathematical function.

According to a fifth aspect of the invention, there is provided a method for controlling a vehicle headlamp light array using a processing unit, comprising: generating frame data comprising selection data indicative of a selected one of a plurality of image types, wherein the plurality of image types comprises at least a low beam image and a high beam image; sending the frame data to a remote node for generating a signal at the remote node usable by the vehicle headlamp light array to generate an output image.

Optionally, the frame data comprises overlay information for generating an overlay to be applied to the selected one of the plurality of image types.

Optionally, the overlay information comprises mask information for generating at least one mask region for inclusion in the overlay.

Optionally, each at least one mask region has a defined light intensity.

Optionally, the defined light intensity is uniform the each at least one mask region, or wherein the defined light intensity varies within each at least one mask region.

Optionally, the defined light intensity is of lower or higher light intensity relative to the non-masked regions. Optionally, the defined light intensity comprises zero intensity.

Optionally, the mask information is indicative of at least one mask coordinate and intensity value for each at least one mask region.

Optionally, each mask coordinate comprises at least one pair of x, y coordinate values, defining a size, shape and position of the mask region.

Optionally, each of the at least one pair of coordinate values comprises 16 bits, and the intensity value comprises 8 bits.

Optionally, the mask information is for generating up to 25 mask regions.

Optionally, the overlay information comprises supplementary information for inclusion in the overlay.

Optionally, the supplementary information is compressed.

According to a sixth aspect of the invention, there is provided a controller/remote node for controlling a light array. The controller/remote node comprising: a memory configured to store a plurality of mathematical functions for generating a corresponding plurality of predetermined image types; a receive interface configured to receive frame data, wherein the frame data comprises selection data indicative of a selected one of the plurality of image types; a rendering engine configured to generate, using a mathematical function of the plurality of mathematical functions corresponding to the selected one of the plurality of image types, a signal usable by the light array to generate an output image; and an output interface configured to output the signal to the light array.

According to a seventh aspect of the invention, there is provided a processing unit for controlling a light array, comprising: a processing unit configured to generate frame data comprising selection data indicative of a selected one of a plurality of image types; and a transmit interface configured to send the frame data to a remote node for generating a signal at the remote node usable by the light array to generate an output image.

According to a eighth aspect of the invention, there is provided a method for controlling a light array using a remote node, comprising: receiving frame data, wherein the frame data comprises selection data indicative of a selected one of a plurality of image types; generating, using a mathematical function corresponding to the selected one of the plurality of image types, a signal usable by the light array to generate an output image; outputting the signal to the light array.

According to a ninth aspect of the invention, there is provided a method for controlling a light array using a processing unit, comprising: generating frame data comprising selection data indicative of a selected one of a plurality of image types; sending the frame data to a remote node for generating a signal at the remote node usable by the light array to generate an output image.

According to a tenth aspect of the invention, there is provided a controller/remote node for controlling a light array, the remote node comprising: a receive interface configured to receive frame data, wherein comprises overlay information for generating an overlay to be applied to an output image; a rendering engine configured to generate, using the overlay information, the overlay; and an output interface configured to output the overlay to the light array.

According to an eleventh aspect of the invention, there is provided a processing unit for controlling a light array, comprising: a processing unit configured to generate frame data comprising overlay information for generating an overlay to be applied to an output image; and a transmit interface configured to send the frame data to a remote node for generating an overlay at the remote node to be applied to the output image.

According to a twelfth aspect of the invention, there is provided a method for controlling a light array using a remote node, comprising: receiving frame data, wherein comprises overlay information for generating an overlay to be applied to an output image; generating, using the overlay information, the overlay; and outputting the overlay to the light array.

According to a thirteenth aspect of the invention, there is provided method for controlling a light array using a processing unit, comprising: generating frame data comprising overlay information for generating an overlay to be applied to an output image; and sending the frame data to a remote node for generating an overlay at the remote node to be applied to the output image.

According to a fourteenth aspect of the invention, there is provided a non-transitory computer readable medium comprising instructions, when executed by a processor, cause the processor to perform the methods of any preceding method statement.

According to a fifteenth aspect of the invention, there is provided a vehicle comprising the remote node and processing unit disclosed herein.

### Brief Description of the Drawings

The invention shall now be described, by way of example only, with reference to the accompanying drawings in which:
FIG. 1 illustrates a vehicle according to an aspect of the invention;
FIG. 2 is a block diagram illustrating the communication between a vehicle CPU, a remote node, and a vehicle headlamp light array;
FIG. 3 shows an example of frame data that may be communicated from a vehicle CPU to a remote node;
FIG. 4 shows further details of the communication between the vehicle CPU, and remote node and vehicle headlamp light array of FIG. 2;
FIG. 5 illustrates an output image projection with mask regions;
FIG. 6 illustrates an output image projection with an overlayed supplementary image;
FIG. 7 illustrates an output image projection with overlayed mask regions and supplementary image;
FIG. 8 is a flow chart illustrating a method performed at a remote node; and
FIG. 9 is a flow chart illustrating a method performed at a processing unit.

### Detailed Description

The present disclosure relates to a system for controlling a light array, in particular a vehicle headlamp light array. Traditional vehicle headlamp systems face limitations in their ability to project images. The system disclosed herein addresses these limitations by introducing a remote node and vehicle central processing unit (CPU) that work together to efficiently generate and transmit data defining details of the image to be output by the light array, ensuring optimal performance and efficiency.

One of the primary challenges with current headlamp systems is the need for high-bandwidth data links to transmit detailed image data from the vehicle's CPU to the headlamp light array. This is particularly true for next-generation high resolution, high refresh rate light arrays (for example, arrays of approximately 100k pixels with a 100Hz refresh rate). This approach requires expensive cabling and connectors, increasing the overall cost and complexity of the vehicle's electrical system. Additionally, the high data rates required for transmitting image data can strain the vehicle's communication infrastructure, potentially impacting the performance of other critical systems.

One solution to addressing high-bandwidth data link challenges may be to significantly compress the image data at the vehicle CPU, transmit the compressed data over the vehicle's communication infrastructure, and then decompress the image data at the image sensor. However, the inventors have identified a number of drawbacks to this. For example, image quality may be reduced if lossy compression is used, whereas efficiency and latency problems may be caused if lossless compression is used. Additionally, ensuring that lossless compression fits within the available bandwidth can be challenging, and it may not be possible to compress the data sufficiently while ensuring that the compression is still lossless. These challenges can lead to delays in rendering dynamic images, such as adaptive beam patterns and overlay information like speed warnings or hazard alerts, which may render desired high refresh rates, such as 100Hz, unworkable.

As a solution to these issues, the inventors have identified that certain types of images, particularly standard vehicle headlight images such as low beam and high beam images, can be described and generated within mathematical functions (see Annex A for an example) that do not require a large amount of data storage. As a result, those functions can be efficiently stored locally to the image array, for example at a remote node proximate to the light array, and then used to generate the image signal for driving the light array. As a result, the amount of data that needs to be communicated from the vehicle's CPU using the vehicle's communication infrastructure may be significantly reduced, since any one of those standard (or predetermined) image types may effectively be communicated from the CPU to the remote node simply by indicating the selection (which may be achieved with a very small number of data bits, such as one-bit, or two-bits, or three-bits, etc). The system may also enhance the flexibility and functionality of vehicle headlamp systems enabling more complex images by incorporating overlay information. Additional image features that are desired for overlaying on the selected standard image, such as image masks and/or supplementary image information like a speed limit symbol or warning symbol (which may improve driver awareness and safety), may be communicated from the CPU to the remote node using a relatively small amount of data. As a result, the overall amount of data to be communicated from the CPU over the vehicle's network infrastructure per frame may be significantly reduced, which may enable a high-resolution, high refresh rate light system whilst utilising relatively low-bandwidth communications systems (such as, for example, 10BaseT1S ethernet links).

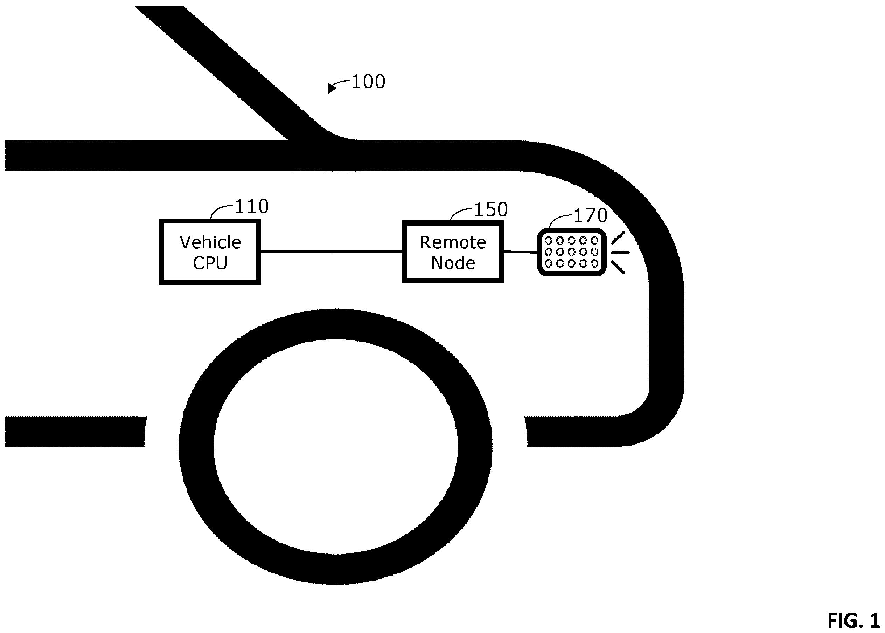

FIG. 1 illustrates a vehicle 100, which includes a vehicle central processing unit (CPU) 110, a remote node 150, and a vehicle headlamp light array 170. The vehicle CPU 110 is connected to the remote node 150, which in turn is connected to the vehicle headlamp light array 170.

The connection between the vehicle CPU 110 and the remote node 150 can be established using various communication links. One example is an Ethernet link such as 10BASE-T1S Ethernet link. However, this is merely an example and should not be considered limiting. Other types of communication links or wireless communication protocols may also be used to connect the vehicle CPU 110 to the remote node 150. Similarly, the remote node 150 may be an E2B (Ethernet to the Edge) device.

The connection between the remote node 150 and the vehicle headlamp light array 170 can be of any suitable type. Examples include direct wired connections, or wireless connections, depending on the specific system implementation, for example the design and requirements of the vehicle headlamp light array 170.

In one example, the vehicle headlamp light array 170 may comprise microLEDs, which may offer several advantages. MicroLEDs provide high brightness, excellent colour accuracy, and energy efficiency, making them useful for automotive lighting applications. Additionally, microLEDs can be precisely controlled to create complex lighting patterns and projections.

While microLEDs have many advantages, the vehicle headlamp light array 170 is not limited to this technology. Other examples of light arrays that can be used include OLED (Organic Light Emitting Diode) arrays, and traditional LED (Light Emitting Diode) arrays. Each of these technologies have their own benefits and can be selected based on the specific requirements of the vehicle's lighting system.

Beyond automotive applications, the system described herein can be applied to various other fields. For example, the system can be adapted for use in controlling advertising displays, and stage lighting for entertainment venues.

By providing a flexible and efficient solution for controlling light arrays, this system offers significant improvements in performance, adaptability, and efficiency across a wide range of applications.

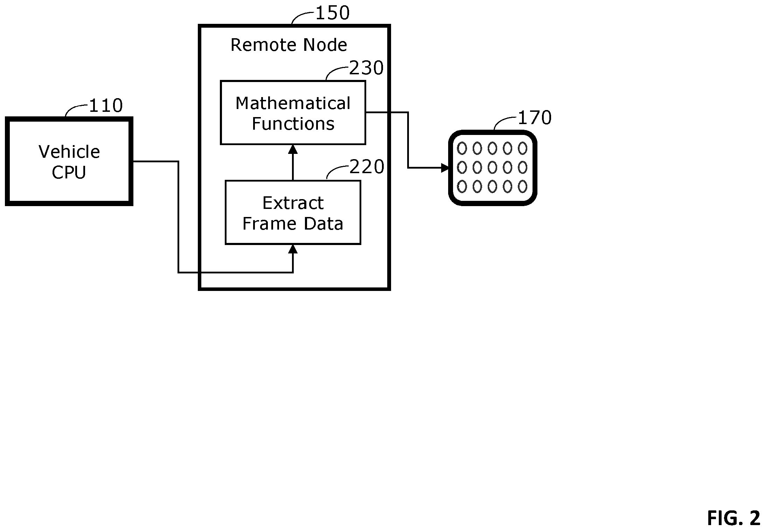

FIG. 2 is a block diagram illustrating the communication between the vehicle CPU 110, the remote node 150, and the vehicle headlamp light array 170. Like reference signs are used to denote like features vis-à-vis FIG. 1.

The remote node 150 includes an extract frame data function/circuit 220 and a mathematical processing function/circuit 230. The separation of separate functions/circuits is made only to simplify explanation of the operation of the remote node 150 and in practice the different functions/circuits may be implemented within a single function/circuit (such as a single software program or function), or may be subdivided in any other suitable way (for example, as two or more interconnected software programs or functions/routines).

The remote node 150 receives frame data from the vehicle CPU 110. The frame data is typically received at the refresh rate of the vehicle headlamp light array 170. For instance, if the vehicle headlamp light array 170 operates at a refresh rate of 100Hz, frame data is received 100 times per second at the remote node 150. However, the remote node 150 may be designed to be flexible and accommodate higher or lower frequencies frame data, regardless of the refresh rate of the vehicle headlamp light array 170, such as 60Hz for less demanding applications or 140Hz for high-performance scenarios. For example, frame data may be received to control the low or high beam projections at a lower frequency, such as 50Hz, compared with the light array 170 100Hz refresh rate, without noticeable impact on user experience. If the frame data is received at 140Hz, which may be higher than the vehicle headlamp light array's refresh rate of 100Hz, the remote node 150 may still process the frame data 140 times per second, but the vehicle headlamp light array 170 would only update at its maximum refresh rate of 100Hz. This means that while the remote node 150 can handle and process data at 140Hz, the actual output to the vehicle headlamp light array 170 would be limited to a 100Hz refresh rate.

The frame data comprises selection data indicative of a selected one of a plurality of image types. Examples of the plurality of image types include low beam and high beam projections. The indication of the selected image type may take any suitable form, for example a selection value within the header information of the frame data, the value of which indicates what the selection is. In the simplest example, selection value=0 may indicate a low beam selection, and selection value=1 may indicate a high beam selection. The extract frame data function/circuit 220 extracts the indication of the selected one of the plurality of image types from the frame data. The frame data may also include overlay information for generating an overlay to be applied to the selected one of the plurality of image types, as explained in more detail later.

The mathematical processing function/circuit 230 may comprise a plurality of mathematical functions (see Annex A for an example), for example stored in memory, for generating a corresponding plurality of image types. As explained above, the plurality of image types may in one example comprise at least a low beam image and a high beam image. The remote node 150 uses a mathematical function from the plurality of mathematical functions corresponding to the selected one of the plurality of image types, as indicated by the selection data, to generate a signal. The signal describes or defines the image in such a way that it can be used to drive the vehicle headlamp light array 170 to generate the output image. The skilled person will readily understand the details of such signals, for example serial or parallel data signals describing a two-dimensional image, and how they may be used to drive a light array (either directly driving the pixels of the array directly, or instructing a light array controller to drive the pixels in a way that causes the generation of the selected image type), and so will not be described further herein. By performing such local processing at the remote note, there is a reduced need for high-bandwidth data transmission associated with transmitting large amounts of raw image data, addressing the issue of expensive cabling and connectors. Furthermore, a very high refresh rate, and very high resolution image may be achieved, addressing issues relating to communication of compressed image data from the CPU over the vehicle communication infrastructure.

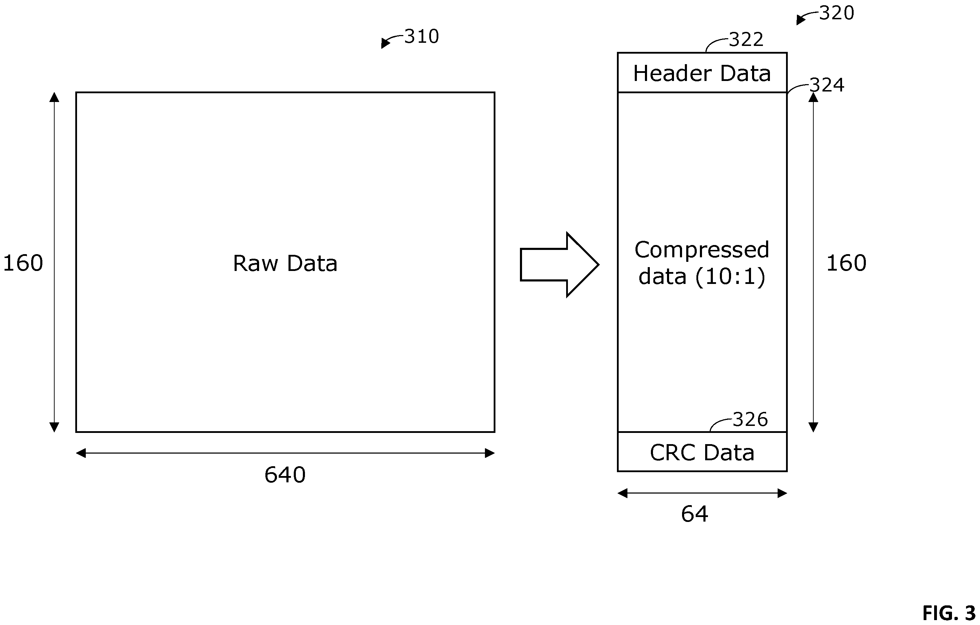

FIG. 3 shows an example of frame data 320 that may be communicated from the vehicle CPU 110 to the remote node 150. The frame data 320 comprises compressed data 324, which is a compressed version of raw image data 310. In this example, raw image data 310 consists of 160 lines, each comprising 640 bytes. This data is compressed at ratio of 10: 1 to compress the 640 bytes per to 64 bytes pre line. However, any other size of raw data 310 and compression ratio may be used. The frame data 320 in this example also comprises header data 322 and CRC data 326.

The selection data indicative of a selected one of a plurality of image types may be included in the header data 322. The header data 322 may optionally also include the mask information of the overlay information.

The raw image data 310 may be a supplementary image that is to be overlayed onto the image projected by the light array 170, such that the compressed data 324 is a compressed version of that supplementary image. Examples of supplementary images include speed warnings, road signs, or other symbols that can be projected in the foreground, for example onto the road surface in front of the vehicle so that the driver can see the supplementary image. In this example, the supplementary image is compressed, but it may not always need to be compressed, depending on the size of the raw data 310, the refresh rate of the system and/or the bandwidth of the communications infrastructure. The invention would still be advantageous even if the supplementary information is not compressed, as the projection of supplementary information is not as frequent or critical as the projection of low beam and high beam images. Also, the size of the supplementary image raw data 310 is typically much smaller than the data that would be required to describe the entire image to be projected by the light array 170, so even without compression there should be considerable data transmission efficiencies. Furthermore, because the raw data 310 is relatively small, a modest compression ratio can be used and even with lossless compression, the latency associated with compression and decompression can be sufficiently low still to be used in high refresh rate systems. Furthermore, because it typically defines non-critical image information, a fast, lossy compression process may be used without any safety critical risk.

Frame data 320 may optionally include CRC (Cyclic Redundancy Check) data 326, which is used to ensure the integrity of the data transmitted from the vehicle CPU 110 to the remote node 150. As the skilled person will understand, the CRC data 326 allows the remote node 150 to verify that the data has been received correctly and has not been corrupted during transmission. This may improve the reliability and accuracy of projection of images by the vehicle headlamp light array 170, but it is not essential.

In some implementations, the selection data, which indicates whether to project a low beam or high beam, is not always included in the frame data 320. Instead, the remote node 150 may sometimes receive only overlay information without the selection data. This approach may allow the remote node 150 to update specific aspects of the projected image, such as mask regions or supplementary images, without needing every instance of frame data to include all information.

For example, in a scenario where the frame data 320 is received at a frequency of 100Hz, the selection data may only be included in every second instance of frame data 320, such that it is updated at a frequency of 50Hz. In this case, the remote node 150 would receive and apply the selection data at the first frame and then continue to use this data until new selection data is received. The alternate instances of frame data that do not include selection data may include overlay information, such as mask regions, such that the overlay information may also be updated at a frequency of 50Hz. In this way, the overall amount of information communicated may be reduced whilst still achieving an acceptable refresh rate for both the selected, predetermined image and the overlay image(s). By decoupling the frequency of receipt of different parts of the frame data 320, the amount of data that needs to be transmitted can be reduced, thereby minimising bandwidth usage and potential latency issues.

For instance, if the vehicle's CPU 110 detects a new hazard on the road, it can send supplementary information to the remote node 150 without needing to resend the low or high beam selection data. The remote node 150 can then apply the supplementary information to the projected high beam or low beam image, ensuring that the driver is alerted to the hazard without any significant delay. This approach may allow the system to maintain high refresh rates and responsiveness.

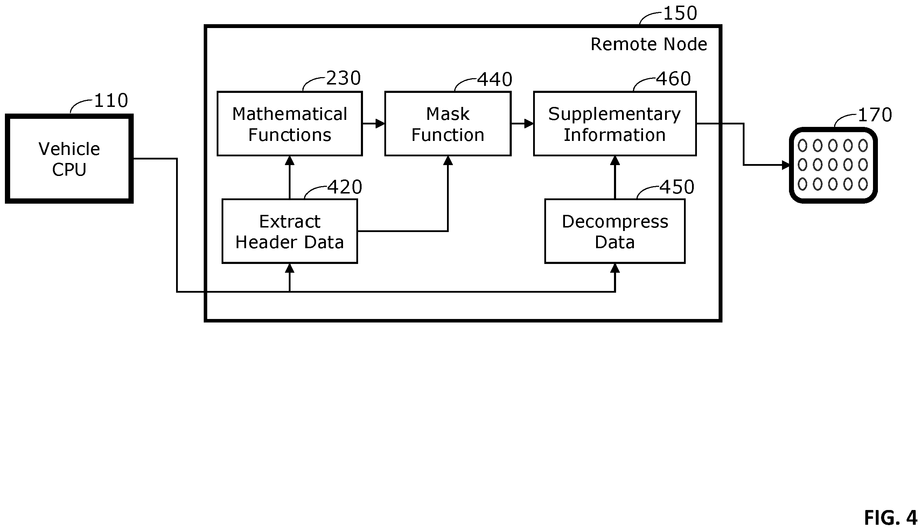

FIG. 4 is a block diagram illustrating the communication between the vehicle CPU 110, the remote node 150, and the vehicle headlamp light array 170 in more detail. Like reference signs are used to denote like features vis-à-vis FIG. 1 and FIG. 2.

In this example, the extract frame data function/circuit 220 may be understood to comprise a series of sub-functions/circuits: an extract header data 420 function, a mask information function 440, a decompress data function 450 and a supplementary information function 460. Again, it should be appreciated that the separation of functions/circuits is made only to simplify explanation of the operation of the remote node 150 and in practice the different functions/circuits may be implemented within a single function/circuit) or may be subdivided in any other suitable way (for example, as two or more interconnected software programs or functions/routines).

The remote node 150 receives frame data 320 from the vehicle CPU 110. The extract header data function/circuit 420 is configured to extract the header data 322 from the frame data 320. In this example, the header data 322 includes selection data, and optionally also mask information (described in more detail later). The selection data is processed by the mathematical processing function/circuit 230. The mathematical processing function/circuit 230 may be configured to use the selection data to select the appropriate mathematical function for the selected image type (for example, each mathematical function may be stored with an association to a particular selection data value, so that the mathematical processing function/circuit 230 can use the extracted selection data to retrieve the appropriate mathematical function) and use it to generate a signal describing the selected image type.

If the extracted header data also includes mask information, this may be processed by the mask function/circuit 440 to generate at least one mask region to be overlaid on the output image generated by the light array. The mask regions are regions of defined light intensity. In some examples, the defined light intensity is of a different light intensity relative to regions of the image that it overlays. For example, the mask regions may be areas with no light intensity (eg, a region where no light is to be emitted), or higher or lower light intensity compared to regions of the image that surround the mask region. They may be used, for example, to reduce or eliminate light projected towards oncoming vehicles and/or pedestrians, thereby enabling relatively bright light output without endangering other road-users.

The mask information may be indicative of a mask coordinate(s) and an intensity value(s) for each of the at least one mask region. The intensity value is indicative of the light intensity of the mask region and may be indicative of a single, uniform intensity level for the entire mask region, or may be indicative of a non-uniform light intensity, such as a gradient across the mask region. The mask coordinate(s) for each mask region may be indicative of the size, shape and/or position of the mask region. In one example, each mask coordinate can comprise at least one pair of x, y coordinate values, used to define the size, shape, and position of the mask region. For example, the mask coordinates for a mask region may comprise three pairs of x, y coordinates that define a triangular shape, or four pairs that define a rectangular shape, or five pairs that define a pentagonal shape, etc. In some other examples, the mask coordinates for a mask region may comprise a single pair of x, y coordinates that is used to define the position of a vertex of the mask region, and the remote node may be configured to generate a mask region of a predetermined size and shape, with one of its vertices at the indicated x,y coordinate. Likewise, in some other examples, the mask coordinates for a mask region may comprise a two pairs of x, y coordinates that is used to define the position of two vertices of the mask region, and the remote node may be configured to generate a mask region using those coordinates. For example, the two pairs of coordinates may define two vertices at opposing corners of a rectangular mask region.

In one example. each pair of coordinate values may comprise 16 bits, and each intensity value may comprise 8 bits. However, other any other suitable number of bits can be used, for example depending on the size of the light array and/or the desired resolution of the mask regions and/or the desired variety of different light intensities for the mask regions. The mask information may define any number of mask regions, e.g., 1, 2, 10, 20, 25, 30, etc.

At the decompress data function 450, the compressed data 324 is decompressed before being processed by the supplementary information function/circuit 460. If the supplementary information in frame data 320 is not compressed (e.g., the raw data 310 is communicated in the frame data 320), the decompress data function 450 is not needed, and the supplementary information can be processed directly by the supplementary information function/circuit 460 to generate a supplementary image for overlaying on the output image. The supplementary image can be customised by the CPU 110 to include information that may be useful for the driver of the vehicle or other drivers on the road, such as speed warnings or hazard alerts.

As a result of these processes, a signal may be output from the remote node 150 to the vehicle headlamp light array 170 for the generation of the output image. The signal will describe an output image corresponding to the selected predetermined image (eg, low or high beam), with an overlay applied on top (e.g., a mask region(s) and/or a supplementary image (s)).

It must be noted that often mask information and/or supplementary information may not be included in the frame data 320. Thus, the output image can be generated solely based on the mathematical function indicated by the selection data, with or without the mask region(s) and/or supplementary image(s). Likewise, sometimes the frame data 320 may include only mask information and/or supplementary information and not selection data, in which case the output image may be generated based on mask information and/or supplementary information, with or without a selected predetermined image.

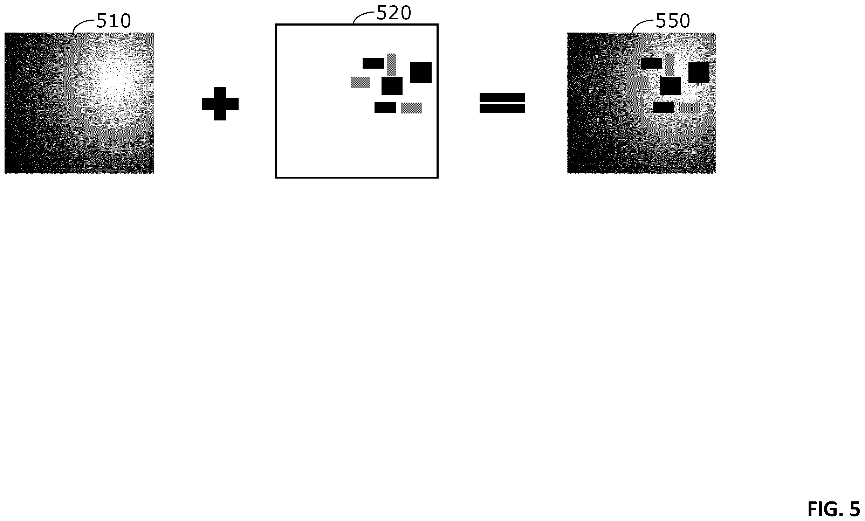

FIG. 5 is a block diagram illustrating an output image projection with mask regions. FIG. 5 shows a predetermined image type 510, which can be, for example, a low beam image or a high beam image that is generated using a mathematical function selected based on selection data received at remote node 150 from the vehicle CPU 110. The predetermined image type 510 is overlaid with mask regions 520 (that are defined by mask information included in the frame data and generated by the mask function/circuit 440) to produce output image 550. As can be seen, as a result the output image 550 has multiple regions with defined intensities that may be different from the intensity of the regions in the predetermined image type 510 that they overlay.

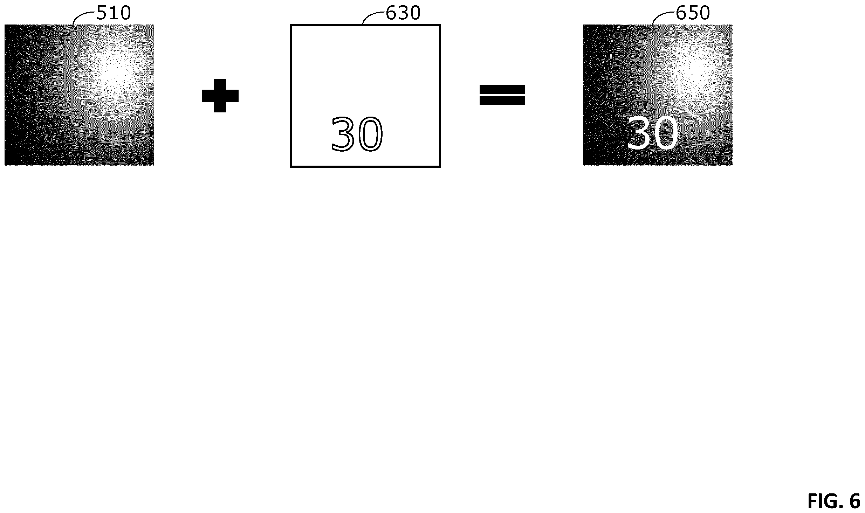

FIG. 6 is a block diagram illustrating an output image projection with an overlayed supplementary image in the form of speed information. Like reference signs are used to denote like features vis-à-vis FIG. 5. In the example of FIG. 6, speed information 630, as described by compressed data 324, is overlaid on the predetermined image type 510 to produce output image 650. Other types of information may be overlaid on the predetermined image type 510 instead of speed information, such as hazard alerts.

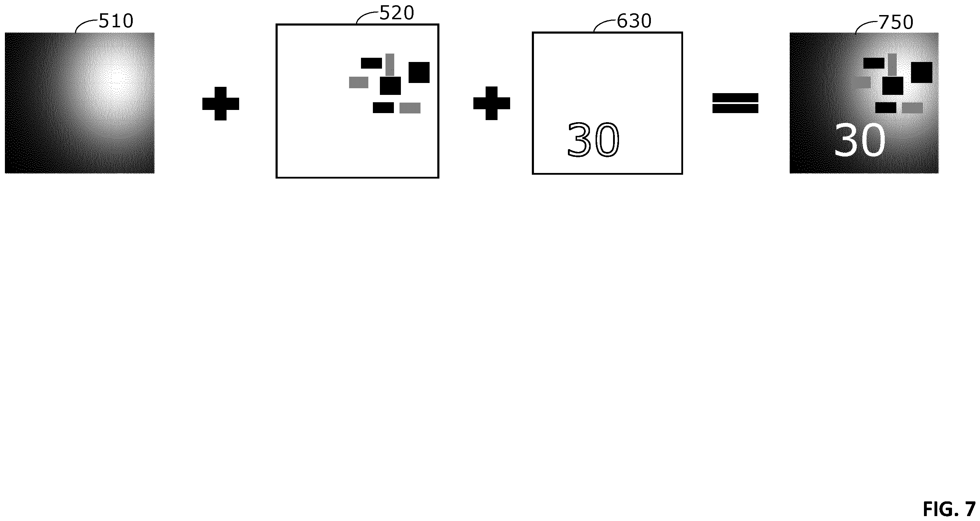

FIG. 7 is a block diagram illustrating an output image projection with overlayed mask regions and supplementary image in the form of speed information. Like reference signs are used to denote like features vis-à-vis FIG. 5 and FIG. 6. In FIG. 7, mask regions 520 and speed information 630 are overlaid on the predetermined image type 510 to produce output image 750, which includes the predetermined image type 510, the mask regions 520, and the speed information 630.

Note that in the absence of mask information and supplementary information, the output image will be the same as the predetermined image type 510.

The frame data 320 may be communicated from the CPU 110 to the remote node 150 at the desired refresh rate of the system. For example, a new frame data 320 may be communicated every 0.02 seconds in a 50Hz system, or every 0.01 seconds in a 100Hz system. As a result, light projected from the vehicle light array 170 may respond very quickly, with minimal latency, to changes, such as a driver or vehicle initiated change in the selected image type (such as going from low beam to high beam, or vice versa), or a change in masking information as a result of a newly detected moving vehicle, or a change in supplementary information to be displayed. In one implementation, every communicated frame may include all the required data. In an alternative, the system may be configured such that if there has been no change in the supplementary image and/or mask regions that were previously communicated to the remote node 150, data relating to the supplementary image and/or mask regions is not recommunicated until a change is desired. For example, CPU 110 may communicate the same mask information and/or compressed data 324 only once or only a predetermined number of times, after which it may omit that information from the frame data 320. It may then only start again to include mask information and/or compressed data 324 when there has been a change in the mask regions and/or supplementary image that is to be projected. In this case, the remote node 150 may be configured to cache the most recently received mask information and/or generated mask overlay information and/or compressed data 324 and/or generated overlay image and continue to use that cached information until mask information and/or compressed data 324 is again included in the frame data 320. Optionally, a similar operation may also be used for selection data that is indicative of the selected one of the plurality of image types.

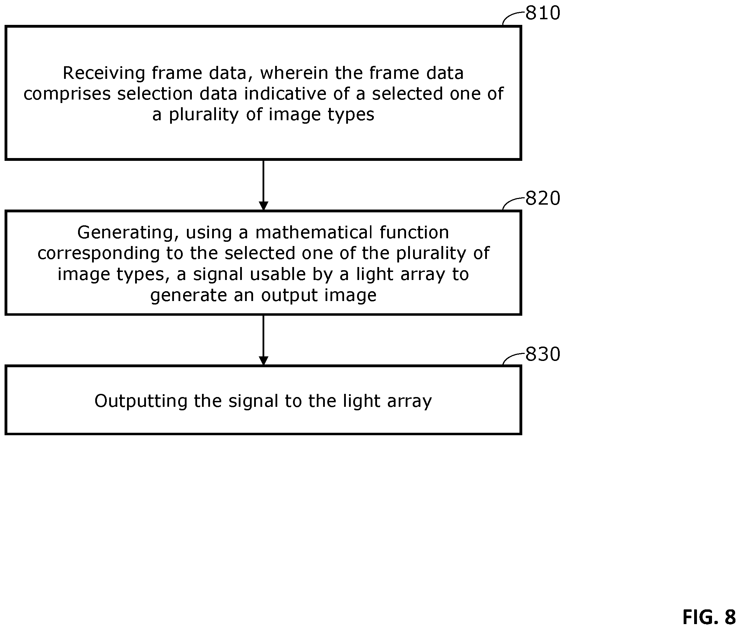

FIG. 8 is a flow chart illustrating a method that may be performed by a processing unit, such as the remote node 150. At step 810, the method comprises receiving frame data, wherein the frame data comprises selection data indicative of a selected one of a plurality of image types. At step 820, the method comprises generating, using a mathematical function corresponding to the selected one of the plurality of image types, a signal usable by the light array to generate an output image. At step 830 the method comprises outputting the signal to the light array.

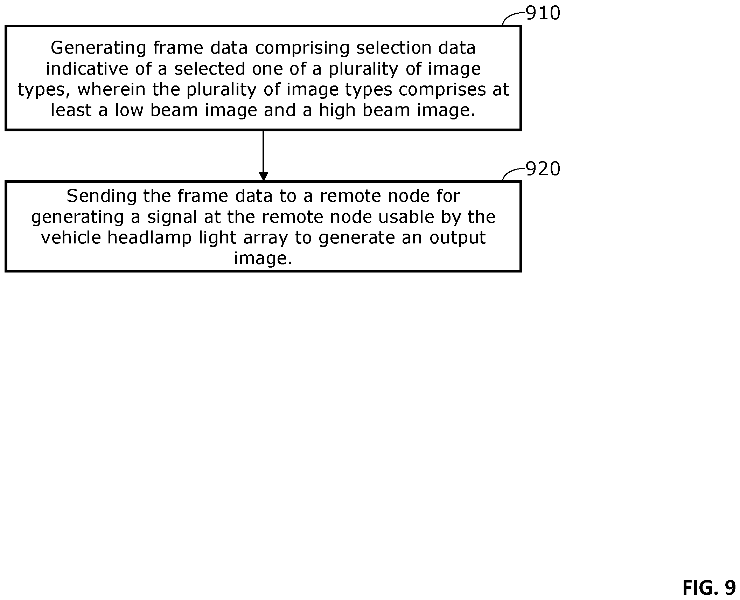

FIG. 9 is a flow chart illustrating a method performed at a processing unit, such as the vehicle CPU 110. At step 910, the method comprises generating frame data comprising selection data indicative of a selected one of a plurality of image types. At step 920, the method comprises sending the frame data to a remote node for generating a signal at the remote node usable by a light array to generate an output image.

The above described functionalities of the vehicle CPU 110 and remote node 150 may each be implemented using any suitable hardware and/or software configurations to meet the system's specific requirements. Each of the vehicle CPU 110 and the remote node 150 may typically comprise a microcontroller and/or microprocessors, which may afford the required processing power to handle tasks such as generating frame data at the vehicle CPU 110 and processing the frame data at the remote node 150.Whilst the above described system uses a vehicle CPU 110, the vehicle CPU 110 may alternatively be any other suitable type of processor/unit, such as a zonal Electronic Control Unit (ECU) responsible for controlling the operations of the vehicle headlamp light array 170.

The vehicle CPU 110 and remote node 150 functionality disclosed herein may be implemented in any suitable way, for example using any suitable hardware and/or software. For example, it may be implemented using a computer program/software, (such as on a computer readable medium, which may be transitory or non-transitory) comprising instructions that, when executed on a processor cause the processor to perform the processes described above. The computer program(s) used to perform the disclosed methods herein can be stored in any suitable transitory or non-transitory computer readable medium. As such, each of the vehicle CPU 110 and remote node 150 may comprise memory, such as volatile and/or non-volatile memory, storing the computer program, and a processor(s) on which the computer program may be executed. Additionally, or alternatively, the functions and circuits disclosed herein can be implemented using any suitable programable logic, or dedicated hardware circuits/components, such as application-specific integrated circuits (ASICs) or field-programmable gate arrays (FPGAs).

This disclosure is not limited to vehicle headlamps or the generation of low beam and high beam images. The techniques disclosed herein can be applied to a wide range of lighting applications beyond the automotive sector. For instance, the invention can be employed in stage lighting for theatres and concerts, or in advertising displays. In this case, the plurality of pre-determined image types may be any type of image that can be generated at the remote node 150 using a mathematical function, and the overlay information may be for generating any type of overlay image to be applied to the selected pre-determined image.

The above implementations are to be understood as illustrative examples. Further implementations are envisaged. It is to be understood that any feature described in relation to any one aspect may be used alone or in combination with other features described, and may also be used in combination with one or more features of any other of the aspects, or any combination of any other of the aspects. Furthermore, equivalents and modifications not described above may also be employed without departing from the scope of the accompanying claims.

### Annex A: Example Script for Generating High Beam or Low Beam Image Types

The following script is an example of a mathematical function using which predetermined high beam and low beam images may be generated. The disclosed parameters are split into two groups: one titled 'Example high beam' for generating a high beam image and another titled 'Example Low beam' for generating a low beam image. The mathematical function uses parameters from the group of parameters for the selected image type to generate the corresponding image.

```
       clc;
       close all;
       clear all;
       canvas_size = [640, 160]; % Canvas size
       light_pos = [480, 40]; % Position of the light source (x, y)
       horiz_decay = 0.002; % Horizontal attenuation
       vert_decay = 0.02; % Vertical attenuation
       light_image = create_light_source(canvas_size, light_pos, horiz_decay, vert_decay);
       % Display the image
       figure;
       imagesc(light_image);
       colormap('gray');
       colorbar;
       title('Example high beam');
       clear all;
       canvas_size = [640, 160]; % Canvas size
       light_pos = [480, 120]; % Position of the light source (x, y)
       horiz_decay = 0.002; % Horizontal attenuation
       vert_decay = 0.02; % Vertical attenuation
       light_image = create_light_source(canvas_size, light_pos, horiz_decay, vert_decay);
       % Display the image
       figure;
       imagesc(light_image);
       colormap('gray');
       colorbar;
       title('Example Low beam');
       function light_canvas = create_light_source(canvas_size, light_pos, horiz_decay,
       vert_decay)
              % Create a canvas for the light source
              light_canvas = zeros(canvas_size(2), canvas_size(1));
              % Position of the light source
              light_x = light_pos(1);
              light_y = light_pos(2);
              % Create the light effect
              for x = 1:canvas_size(1)
                     for y = 1:canvas_size(2)
                             % Calculate the distance with different attenuation
                             distance = sqrt(((x - light_x) * horiz_decay)^2 + ((y - light_y)
                             * vert_decay)^2);
                             light_canvas(y, x) = exp(-distance);
                     end
              end
       end
```

This example script allows for the generation of two images: one representing a high beam with the light source positioned higher on the canvas, and another representing a low beam with the light source positioned lower. The high beam image shows a more focused and intense light pattern, suitable for illuminating long distances, while the low beam image provides a broader and softer light pattern, ideal for close-range visibility without causing glare.

The mathematical function for generating the high beam or low beam image is encapsulated in the 'create_light_source' function. This function calculates the light intensity based on the distance from the light source using an exponential decay formula. The selection data provided by the vehicle CPU to the remote node may be indicative of which pre-determined parameters to use. For example, the selection data might specify whether to use the high beam parameters (as shown in the group of parameters under the title 'Example high beam') or the low beam parameters (as shown in the group of parameters under the title 'Example Low beam'). The two sets of parameters may be stored in memory that is accessible to the remote node (for example, they may be stored as part of remote node computer program) and the selected parameters are then used in the 'create_light_source' function to produce the corresponding high beam or low beam light pattern.

In this example, the parameters in each of the high beam parameter group and the low beam parameter group begin by defining the canvas size and the position of the light source. These initial parameters set up the environment in which the light pattern will be generated.

The canvas size defines the dimensions of the image frame. This size can be adjusted based on the desired resolution of the light pattern. For example, a larger canvas size like '[1280, 320]' can be used for higher resolution images, providing more detail and smoother gradients in the light pattern.

The light position specifies the x and y coordinates of the light source. In the script, the high beam light source is positioned at '[480, 40]', which is higher on the canvas, while the low beam light source is positioned at '[480, 120]', which is lower. This variation in the y-axis simulates the different beam patterns used for high and low beams. High beams are designed to illuminate a greater distance ahead, hence the higher position, while low beams are aimed lower to avoid dazzling oncoming drivers.

It should be noted that in this coordinate system, the origin (0,0) is at the top-left corner of the canvas. This means that moving down the canvas increases the y-coordinate value, making it positive. Therefore, a y-coordinate of '40' places the light source closer to the top of the canvas, simulating a high beam, while a y-coordinate of '120' places the light source closer to the bottom, simulating a low beam.

The light position is typically not central to ensure that the light pattern does not dazzle oncoming drivers. The x-axis variation, where the light source is positioned towards the right, simulates the typical alignment of vehicle headlamps, which are often angled slightly to the right (in countries with right-side driving traffic) to avoid blinding oncoming traffic. The exact positioning and angle can vary depending on the laws and regulations of different countries. For example, in countries with left-side driving traffic, the light source might be positioned towards the left to achieve the same effect.

The horizontal and vertical decay parameters control how quickly the light intensity decreases horizontally and vertically. These values can be modified to achieve different light spread effects. For example, a horizontal decay of '0.001' and a vertical decay of '0.01' can create a wider and less intense light spread. The decay parameters determine how the light fades with distance from the source. The exponential decay function may result in light intensity decreasing smoothly, creating a natural-looking light pattern. By adjusting these parameters, the system can simulate various lighting conditions and beam patterns.

The script uses a nested for loop to iterate over each pixel in the canvas, calculating the distance from the light source and applying the exponential decay to determine the pixel's brightness. This method may result in the light intensity decreasing smoothly, creating a natural-looking light pattern. The use of an exponential decay function is particularly effective for simulating the gradual dimming of light as it moves away from the source.

This script serves as just one example, and different parameters can be used to achieve various light patterns. Additionally or alternatively, different mathematical functions may be employed to generate low beam or high beam images, depending on the specific requirements and design of the vehicle headlamp system. Furthermore, different functions and/or parameters may be used to generate predetermined image types other than low and high beam images, for example where the techniques of this disclosure are used for non-automotive applications, such as stage lighting, etc.

## Claims

1. . A remote node for controlling a vehicle headlamp light array, the remote node comprising:
a memory configured to store a plurality of mathematical functions for generating a corresponding plurality of predetermined image types, wherein the plurality of image types comprises at least a low beam image and a high beam image;
a receive interface configured to receive frame data, wherein the frame data comprises selection data indicative of a selected one of the plurality of image types;
a rendering engine configured to generate, using a mathematical function of the plurality of mathematical functions corresponding to the selected one of the plurality of image types, a signal usable by the vehicle headlamp light array to generate an output image; and
an output interface configured to output the signal to the vehicle headlamp light array.

2. . The remote node of claim 1, wherein the frame data comprises overlay information for generating an overlay to be applied to the selected one of the plurality of image types, wherein the rendering engine is configured to generate the signal further using the overlay information.

3. . The remote node of claim 2, wherein the overlay information comprises mask information for generating at least one mask region for inclusion in the overlay.

4. . The remote node of claim 3, wherein each at least one mask region has a defined light intensity.

5. . The remote node of either of claims 3 or 4, wherein the mask information is indicative of at least one mask coordinate and an intensity value for each at least one mask region.

6. . The remote node of any of claims 2 to 5, wherein the overlay information comprises supplementary information for inclusion of a supplementary image in the overlay.

7. . The remote node of claim 6, wherein the supplementary information comprises a compressed version of the supplementary image and the rendering engine is configured to generate the supplementary image using the supplementary information.

8. . The remote node of any preceding claim, wherein the plurality of mathematical functions are received from a processing unit.

9. . The remote node of any preceding claim, wherein the frame data further comprises parameter changes to the mathematical function.

10. . A processing unit for controlling a vehicle headlamp light array, comprising:
a processing unit configured to generate frame data comprising selection data indicative of a selected one of a plurality of image types, wherein the plurality of image types comprises at least a low beam image and a high beam image; and
a transmit interface configured to send the frame data to a remote node for generating a signal at the remote node usable by the vehicle headlamp light array to generate an output image.

11. . The processing unit of claim 10, wherein the frame data comprises overlay information for generating an overlay to be applied to the selected one of the plurality of image types.

12. . The processing unit of claim 11, wherein the overlay information comprises mask information for generating at least one mask region for inclusion in the overlay,
wherein optionally each at least one mask region has a defined light intensity.

13. . The processing unit of claim 11 or claim 12 wherein the overlay information comprises supplementary information for inclusion in the overlay,
wherein optionally the supplementary information is compressed.

14. . A method for controlling a vehicle headlamp light array using a remote node, comprising:
receiving frame data, wherein the frame data comprises selection data indicative of a selected one of a plurality of image types, wherein the plurality of image types comprises at least a low beam image and a high beam image;
generating, using a mathematical function corresponding to the selected one of the plurality of image types, a signal usable by the vehicle headlamp light array to generate an output image; and
outputting the signal to the vehicle headlamp light array.

15. : A computer program comprising instructions that, when executed by one or more processors, cause the one or more processors to perform the method of claim 14.
